# EUROPÄISCHE PATENTSCHRIFT

(11) **EP 1 268 646 B1**
(45) Veröffentlichungstag und Bekanntmachung des Hinweises auf die Patenterteilung: **21.04.2004**
(21) Anmeldenummer: 00983432.6
(22) Anmeldetag: 18.12.2000
(51) Int. Cl.: C08K 5/50, C08K 5/15

(54) **MISCHUNGEN AUS PHOSPHANEN UND CHROMAN-DERIVATEN**
MIXTURES OF PHOSPHANES AND CHROMANE DERIVATIVES
MELANGE DE DERIVES DE PHOSPHANES ET DE CHROMANES

(30) Priorität: 20.12.1999 DE 19961464
(43) Veröffentlichungstag der Anmeldung: 02.01.2003
(73) Patentinhaber: Clariant Finance (BVI) Limited, Road Town, Tortola (VG)
(72) Erfinder: KRÖHNKE, Christoph, 79206 Breisach-Oberrimsingen (DE); STANIEK, Peter, 79589 Binzen (DE)
(74) Vertreter: Kachholz, Traudel
(86) Internationale Anmeldenummer: PCT/IB2000/001897
(87) Internationale Veröffentlichungsnummer: WO 2001/046310

(56) Entgegenhaltungen:
- WO-A-97/49758
- US-A- 3 637 907
- US-A- 5 488 079

## Beschreibung

Die Erfindung betrifft synergistische Mischungen, die Phosphane, (Di/Oligo)phosphane, Cyclophosphane als Komponente 1 und 6-Hydroxy-chromanderivate als Komponente 2 enthalten sowie ein Verfahren zum Stabilisieren von Polymeren gegen durch Hitze oder mechanischen Stress ausgelösten Abbau mit solchen Mischungen.

Bei der Verarbeitung von Polymeren zu den Endprodukten sind die Polymere u.a. hohen Temperaturen ausgesetzt. Dies kann nachteilige Auswirkungen auf die Schmelzviskosität und physikalische Eigenschaften der Polymeren sowie auf das Erscheinungsbild der daraus hergestellten Endprodukte haben. Daher sind geeignete Stabilisatoren oder Stabilisatorsysteme erforderlich, um Oxidation, Kettenbruch oder Verfärbungen zu minimieren.

WO-A-97/49758 offenbart Stabilisatormischungen aus Tocopherol und Phosphite zur Stabilisierung von Polypropylen, US-A-3637907 und US-A-5488079 offenbaren Phosphorverbindungen ähnlich der vorliegenden Anmeldung zur Stabilisierung von Polypropylene

Viele der bekannten Stabilisatoren oder Stabilisatorsysteme zeigen allerdings Nachteile wie z.B. unzureichende Effizienz und Defizite bei anderen Anforderungen wie z.B. mangelnde Stabilität gegen Hydrolyse, Neigung zur Farbbildung, stark limitierte Verträglichkeit mit den zu stabilisierenden Polymeren und eingeschränkte Temperaturstabilität. Wegen der limitierten Verträglichkeit werden geringere Konzentrationen der Stabilisatoren in den Polymeren gewünscht, das durch die Verwendung effizienterer Stabilisatorsysteme erreicht werden kann.

Es ist daher Aufgabe der vorliegenden Patentanmeldung, neue und leistungsfähigere Stabilisatorsysteme bereitzustellen.

Diese Aufgabe wird durch die erfindungsgemässe synergistische Stabilisatormischung gelöst, die, da sie die hitzebedingten schädlichen Reaktionen bereits in kleinen Einsatzmengen verhindert, ein verbesserter Verarbeitungsstabilisator für Polymere ist.

Gegenstand der Erfindung ist eine Mischung enthaltend
a) mindestens eine Verbindung aus der Gruppe der Verbindungen der Formeln (I) bis (IV) [nachfolgend Komponente 1 genannt] 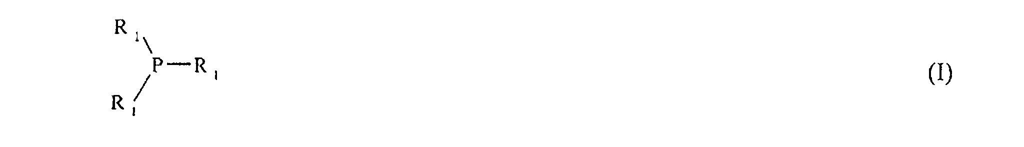 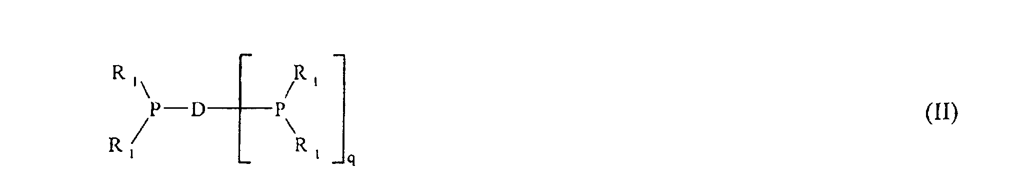 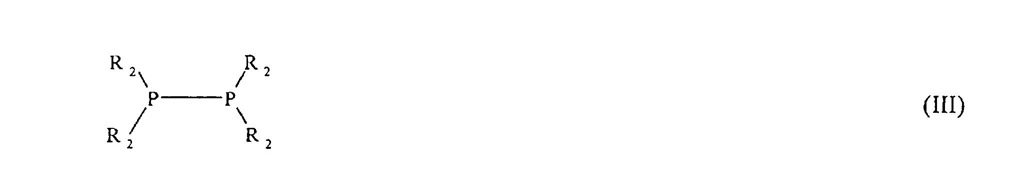 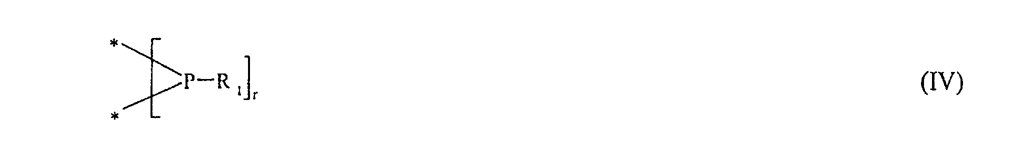 und
b) mindestens eine Verbindung der allgemeinen Formel (V) [nachfolgend Komponente 2 genannt] 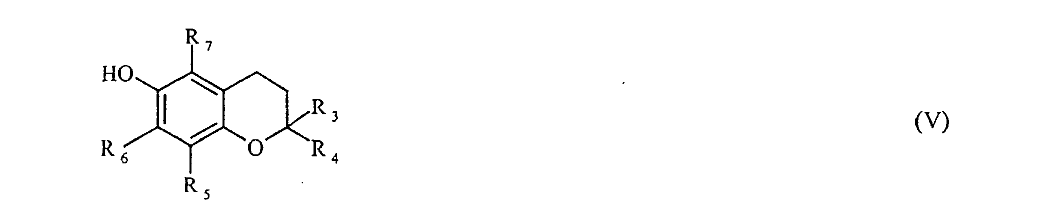
worin unabhängig voneinander
- R₁: C₁₋₂₄Alkyl (linear oder verzweigt), C₅₋₃₀Cycloalkyl, C₁₋₃₀Alkylaryl, C₆₋₂₄Aryl, C₄₋₂₄Heteroaryl,
C₆₋₂₄Aryl oder C₄₋₂₄Heteroaryl, ein- oder mehrfach substituiert mit C₁₋₁₈Alkyl (linear oder verzweigt), C₅₋₁₂Cycloalkyl oder C₁₋₁₈Alkoxy;
- R₂: C₄₋₂₄Alkyl (linear oder verzweigt), C₅₋₃₀Cycloalkyl, C₁₋₃₀Alkylaryl, C₆₋₂₄Aryl, C₄₋₂₄Heteroaryl,
C₆₋₂₄Aryl oder C₄₋₂₄Heteroaryl, ein- oder mehrfach substituiert mit C₁₋₁₈Alkyl (linear oder verzweigt), C₅₋₁₂Cycloalkyl oder C₁₋₁₈Alkoxy;
- R₃: Wasserstoff, C₁₋₂₄Alkyl (linear oder verzweigt), C₃₋₁₂Cycloalkyl, C₁₋₂₄Alkenyl, ein- oder mehrfach ungesättigt, linear oder verzweigt;
- R₄, R₅, R₆, R₇: Wasserstoff, C₁₋₂₄Alkyl (linear oder verzweigt), C₃₋₁₂Cycloalkyl, C₁₋₂₄Alkenyl, ein- oder mehrfach ungesättigt, linear oder verzweigt, Carboxylgruppen -COOR₈, Succinylgruppen -CH(COOR₈)-CH₂-COOR₈;
- R₈: Wasserstoff, C₁₋₂₀Alkyl (linear oder verzweigt), C₄₋₁₂Cycloalkyl oder C₂₋₂₀Polyethylen-glycolgruppen;
- D: C₁₋₃₀Alkylen (linear, verzweigt), C₂₋₃₀Alkyliden, C₅₋₁₂Cycloalkylen, oder C₆₋₂₄Arylen oder C₄₋₂₄Heteroarylen,
C₆₋₂₄Arylen oder C₄₋₂₄Heteroarylen, ein- oder mehrfach substituiert mit C₁₋₁₈Alkyl (linear oder verzweigt), C₅₋₁₂Cycloalkyl oder C₁₋₁₈Alkoxy;
- q: 1 bis 5;
- r: 3 bis 6, wobei die Gruppen P-R₁ in der Formel (IV) Bestandteil eines Phosphacyclus sind, angedeutet durch * an den vom P ausgehenden Bindungen,
bedeuten.

Bevorzugt sind Mischungen, in denen die Reste R und Buchstaben in den Formeln zu den Verbindungen (I) bis (V) folgende Bedeutungen haben:
- R₁': C₈₋₂₄Alkyl (linear oder verzweigt), C₆₋₁₂Cycloalkyl, C₂₋₂₄Alkylaryl, C₆₋₂₄Aryl oder C₄₋₁₈Heteroaryl,
C₆₋₂₄Aryl oder Heteroaryl, ein- oder mehrfach substituiert mit C₁₋₁₂Alkyl (linear oder verzweigt), C₅₋₈Cycloalkyl oder C₁₋₁₂Alkoxy;
- R₂': C₆₋₁₈Alkyl (linear oder verzweigt), C₅₋₁₂Cycloalkyl, C₁₋₁₈Alkylaryl, C₆₋₂₄Aryl, C₄₋₁₈Heteroaryl,
C₆₋₂₄Aryl oderC₄₋₁₈Heteroaryl, ein- oder mehrfach substituiert mit C₁₋₁₂Alkyl (linear oder verzweigt), C₅₋₈Cycloalkyl oder C₁₋₁₂Alkoxy;
- R₃': C₁₋₂₀Alkyl (linear oder verzweigt), C₄₋₈Cycloalkyl, C₁₋₂₀Alkenyl, ein- oder mehrfach ungesättigt, linear oder verzweigt;
- R₄', R₅', R₆', R₇': Wasserstoff, C₁₋₂₀Alkyl (linear oder verzweigt), C₄₋₈Cycloalkyl, C₁₋₂₀Alkenyl, ein- oder mehrfach ungesättigt, linear oder verzweigt, Carboxylgruppen, -COOR₈', Succinylgruppen -CH(COOR₈')-CH₂-COOR₈';
- R₈': Wasserstoff, C₁₋₁₂Alkyl (linear oder verzweigt), C₄₋₈Cycloalkyl oder C₄₋₁₆Polyethylen-glycolgruppen;
- D': C₁₋₂₄Alkylen (linear, verzweigt), C₂₋₂₄Alkyliden, C₅₋₈Cycloalkylen, oder C₆₋₂₄Arylen oder C₄₋₁₈Heteroarylen,
C₆₋₂₄Arylen oder C₄₋₁₈Heteroarylen, ein- oder mehrfach substituiert mit C₁₋₁₈Alkyl (linear oder verzweigt), C₅₋₈Cycloalkyl oder C₁₋₁₂Alkoxy;
- q': 1 bis 4;
- r': 4 oder 5, wobei die Gruppen P-R₁ in der Formel (IV) Bestandteil eines Phosphacyclus sind, angedeutet durch * an den vom P ausgehenden Bindungen.

Besonders bevorzugt sind Mischungen, in denen die Reste R und Buchstaben in den Formeln zu den Verbindungen (I) bis (V) folgende Bedeutungen haben:
- R₁": C₆₋₂₄Aryl oder C₄₋₁₈Heteroaryl,
C₆₋₂₄Aryl oder C₄₋₁₈Heteroarylen, ein- oder mehrfach substituiert mit C₁₋₁₂Alkyl (linear oder verzweigt), C₅₋₈Cycloalkyl oder C₁₋₁₂Alkoxy;
- R₂": C₈₋₁₈Alkyl (linear oder verzweigt), C₅₋₈Cycloalkyl, C₁₋₁₈Alkylaryl, C₆₋₁₂Aryl, C₄₋₁₈Heteroaryl,
C₆₋₁₂Aryl oder C₄₋₁₈Heteroaryl, ein- oder mehrfach substituiert mit C₁₋₁₂Alkyl (linear oder verzweigt), C₆₋₈Cycloalkyl oder C₁₋₈Alkoxy;
- R₃": C₁₋₁₆Alkyl (linear oder verzweigt), C₅₋₈Cycloalkyl, C₁₋₁₆Alkenyl, ein- oder mehrfach ungesättigt, linear oder verzweigt;
- R₄", R₅", R₆", R₇": Wasserstoff, C₁₋₁₆Alkyl (linear oder verzweigt), C₅₋₈Cycloalkyl, C₁₋₁₆Alkenyl, ein- oder mehrfach ungesättigt, linear oder verzweigt; -COOR₈", -CH(COOR₈")-CH₂-COOR₈";
- R₈": Wasserstoff, C₁₋₈Alkyl (linear oder verzweigt), C₅₋₈Cycloalkyl oder C₆₋₁₂Polyethylen-glycolgruppen;
- D": C₁₋₁₈Alkylen (linear, verzweigt), C₂₋₂₄Alkyliden, C₅₋₈Cycloalkylen, oder C₆₋₂₄Arylen oder C₄₋₁₈Heteroarylen
C₆₋₂₄Arylen oder C₄₋₁₈Heteroarylen, ein- oder mehrfach substituiert mit C₁₋₁₈Alkyl (linear oder verzweigt), C₅₋₈Cycloalkyl oder C₁₋₁₂Alkoxy;
- q": 1 bis 4;
- r": 4 oder 5, wobei die Gruppen P-R₁ in der Formel (IV) Bestandteil eines Phosphacyclus sind, angedeutet durch * an den vom P ausgehenden Bindungen.

Besonders geeignet sind alle Mischungen, die durch Kombination einer oder mehrerer der im folgenden genannten Komponenten 1 und 2 gebildet werden können:

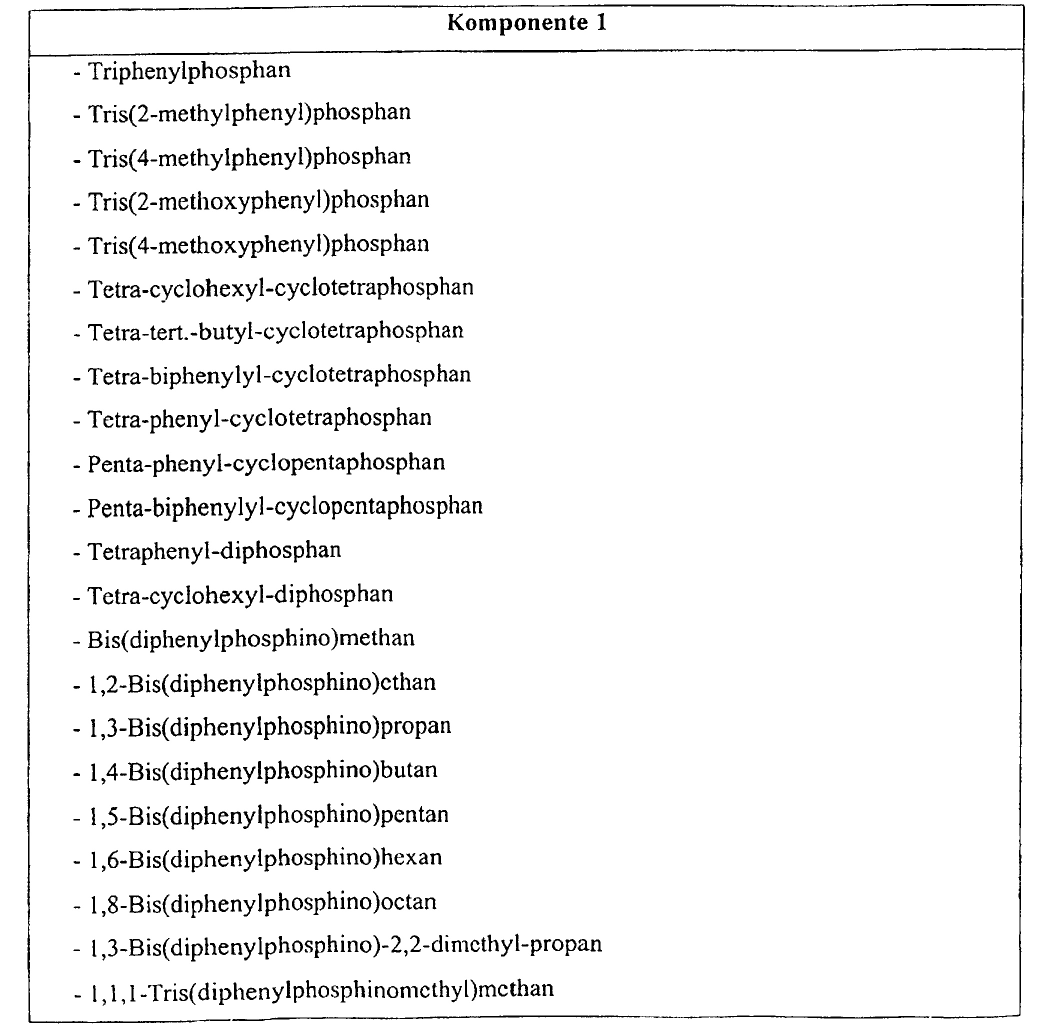

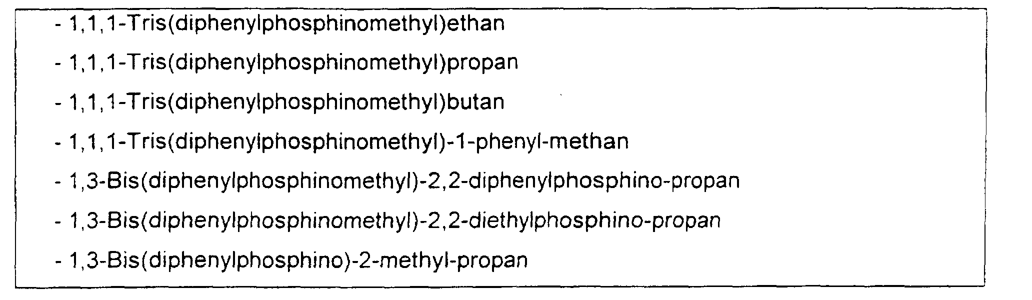

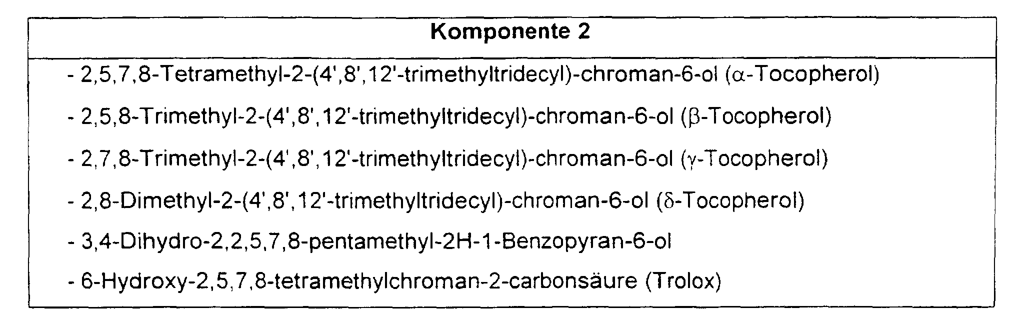

Von diesen Mischungen sind folgende Mischungen der Komponenten 1 und 2 ganz besonders bevorzugt:
A) worin Komponente 1 Triphenylphosphan und Komponente 2 α-Tocopherol ist;
B) worin Komponente 1 Triphenylphosphan und Komponente 2 3,4-Dihydro-2,2,5,7,8-pentamethyl-2H-1-Benzopyran-6-ol ist;
C) worin Komponente 1 Tris(4-methylphenyl)phosphan und Komponente 2 α-Tocopherol ist;
D) worin Komponente 1 Tris(4-methylphenyl)phosphan und Komponente 2 3,4-Dihydro-2,2,5,7,8-pentamethyl-2H-1-Benzopyran-6-ol ist;
E) worin Komponente 1 Tris(4-methoxyphenyl)phosphan und Komponente 2 α-Tocopherol ist;
F) worin Komponente 1 Tris(4-methoxyphenyl)phosphan und Komponente 2 3,4-Dihydro-2,2,5,7,8-pentamethyl-2H-1-Benzopyran-6-ol ist;
G) worin Komponente 1 Tris(2-methylphenyl)phosphan und Komponente 2 α-Tocopherol ist;
H) worin Komponente 1 Tris(2-methylphenyl)phosphan und Komponente 2 3,4-Dihydro-2,2,5,7,8-pentamethyl-2H-1-Benzopyran-6-ol ist;
I) worin Komponente 1 Tris(2-methoxyphenyl)phosphan und Komponente 2 α-Tocopherol ist;
J) worin Komponente 1 Tris(2-methoxyphenyl)phosphan und Komponente 2 3,4-Dihydro-2,2,5,7,8-pentamethyl-2H-1-Benzopyran-6-ol ist;
K) worin Komponente 1 Tetra-cyclohexyl-cyclotetraphosphan und Komponente 2 α-Tocopherol ist;
L) worin Komponente 1 Tetra-cyclohexyl-cyclotetraphosphan und Komponente 2 3,4-Dihydro-2,2,5,7,8-pentamethyl-2H-1-Benzopyran-6-ol ist;
M) worin Komponente 1 Bis(diphenylphosphino)methan und Komponente 2 α-Tocopherol ist;
N) worin Komponente 1 Bis(diphenylphosphino)methan und Komponente 2 3,4-Dihydro-2,2,5,7,8-pentamethyl-2H-1-Benzopyran-6-ol ist;
O) worin Komponente 1 1,3- Bis(diphenylphosphino)propan und Komponente 2 α-Tocopherol ist;
P) worin Komponente 1 1,3- Bis(diphenylphosphino)propan und Komponente 2 3,4-Dihydro-2,2,5,7,8-pentamethyl-2H-1-Benzopyran-6-ol ist;
Q) worin Komponente 1 1,3- Bis(diphenylphosphino)-2,2-dimethyl-propan und Komponente 2 α-Tocopherol ist;
R) worin Komponente 1 1,3- Bis(diphenylphosphino)-2,2-dimethyl-propan und Komponente 2 3,4-Dihydro-2,2,5,7,8-pentamethyl-2H-1-Benzopyran-6-ol ist;
S) worin Komponente 1 1,1,1-Tris(diphenylphosphinomethyl)ethan und Komponente 2 α-Tocopherol ist;
T) worin Komponente 1 1,1,1-Tris(diphenylphosphinomethyl)ethan und Komponente 2 3,4-Dihydro-2,2,5,7,8-pentamethyl-2H-1-Benzopyran-6-ol ist;
U) worin Komponente 1 1,1,1-Tris(diphenylphosphinomethyl)propan und Komponente 2 α-Tocopherol ist;
V) worin Komponente 1 1,1,1-Tris(diphenylphosphinomethyl)propan und Komponente 2 3,4-Dihydro-2,2,5,7,8-pentamethyl-2H-1-Benzopyran-6-ol ist;

Eine ausreichende Stabilisierung ist mit bekannten Mischungen basierend auf handelsüblichen Stabilisatoren (Phosphite/Phosphonite) nicht zu erreichen. Dagegen können die Komponenten der erfindungsgemässen Mischungen in geringsten Mengen eingesetzt werden, die u.U. unterhalb von 0,01 Gew.-%, bezogen auf das polymere Material, liegen. Aufgrund dieser deutlich verringerten Einsatzkonzentrationen an Stabilisatoren kann ein sowohl ökonomischer als auch ökologischer Vorteil für den Produzenten und Anwender solchermassen stabilisierter Polymere erzielt werden.

Je nach Anforderungsprofil der Endprodukte und Art der zu stabilisierenden Polymeren kann eine optimale Stabilisierung durch Variation des Verhältnisses der beiden Komponenten erzielt werden.

Vorzugsweise umfassen die Mengenverhältnisse der Komponente 1 zur Komponente 2 in der erfindungsgemässen Mischung 50:1 bis 2:1, bevorzugt von 20:1 bis 1,5:1, besonders bevorzugt von 15:1 bis 1:1.

Die Komponenten 1 bzw. 2 können jeweils entweder aus je einer, aber auch aus mehreren Verbindungen der gleichen Komponentengruppe bestehen.

Die Einsatzmengen der Mischungen aus den Komponenten 1 und 2 betragen, bezogen auf das zu stabilisierende polymere Material, 0,001 bis 2 Gew.-%, bevorzugt 0,005 bis 1 Gew.-%, besonders bevorzugt 0,0075 bis 0,75 Gew.-%.

Die Mischungen aus den Komponenten 1 und 2 können durch einfaches Mischen, durch Mischen in der Schmelze, durch Lösen oder Dispergieren einer Komponente in der flüssigen oder geschmolzenen anderen Komponente, durch Mischen zweier Schmelzen oder durch gemeinsames Aufschmelzen, falls erforderlich, jeweils gefolgt von einem Abkühlungsschritt hergestellt werden. Ebenfalls werden erfindungsgemässe Mischungen durch Mischen und Einengen von Lösungen der Komponenten in geeigneten Solventien erhalten. Die Herstellung der Mischungen kann sowohl als Batchprozess in geeigneten Apparaturen, wie verschiedenen Mischern oder Reaktoren, etc., oder auch kontinuierlich, z.B. in Extrudern, kontinuierlichen Mischern, Knetern oder Walzenstühlen, durchgeführt werden. Anschliessend kann - sofern es noch notwendig ist - eine geeignete Handelsform z.B. durch Kompaktieren, Pelletieren, Pressen, Extrudieren oder auf andere Weise, hergestellt werden.

Erfindungsgemäss wird auch ein Verfahren zum Stabilisieren von polymeren Materialien gegen den thermo-oxidativen Abbau bereitgestellt. Dieses Verfahren umfasst die Zugabe und Einarbeitung einer stabilisierenden Menge der erfindungsgemässen Mischung in fester oder geschmolzener Form, in Lösung (bevorzugt als flüssiges Konzentrat), in einer Mischung mit anderen Additiven in Form von Pulverblends, Extrudaten oder anderen Handelsformen, als Compound (Mischung aus einem Polymeren und einer erfindungsgemässen Mischung und weiteren Additiven, wie z.B. Säurefängern (z.B. Metallseifen, Dihydrotalciten, etc.) oder sterisch gehinderten Phenolen, in Form von Pulverblends, Extrudaten oder anderen Handelsformen) oder auch als feste Masterbatch-Zusammensetzung in solchen Mengen, dass eine Stabilisatorkonzentration von 0,001 bis 2 Gew.-%, bevorzugt 0,005 bis 1 Gew.-%, besonders bevorzugt 0,0075 bis 0,75 Gew.-%, bezogen auf das zu stabilisierende polymere Material, erzielt wird.

Ein solches flüssiges Konzentrat umfasst 10 bis 80 Gew.-% einer erfindungsgemässen Mischung und 90 bis 20 Gew.-% eines Lösungsmittels.

Eine derartige Masterbatch-Zusammensetzung (auch feste Grundmischung genannt) umfasst 5 bis 80 Gew.-%, bevorzugt 10 bis 70 Gew.-%, besonders bevorzugt 15 bis 40 Gew.-% einer erfindungsgemässen Mischung und 95 bis 20 Gew.-%, bevorzugt 90 bis 30 Gew.-%, besonders bevorzugt 85 bis 60 Gew.-% eines polymeren Materials, das identisch oder kompatibel mit dem zu stabilisierenden polymeren Material ist. Ein entsprechendes Compound enthält die gleichen Gewichtsmengen der erfindungsgemässen Mischung wie eine Masterbatch-Zusammensetzung, die Gewichtsmenge des polymeren Materials ist aber entsprechend der Menge der weiteren Additive reduziert.

Alle Komponenten der erfindungsgemässen Mischung können aus bekannten Verbindungen mit bekannten Methoden hergestellt werden.

Die erfindungsgemässen Mischungen aus den Komponenten 1 und 2 lassen sich als Verarbeitungsstabilisatoren für polymere Materialien einsetzen, vorzugsweise für
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE). Polyolefine, d.h. Polymere von Monoolefinen, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder -n- oder α-koordiniert sein können. Diese Metallkomplexe können frei oder auf Träger fixiert sein, wie beispielsweise auf aktiviertem Magnesiumchlorid, Titanchlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beispielsweise mit weiteren Ester-, Ether-, Amin- oder Silylether-Gruppen modifiziert sein. Diese Katalysatorsysteme werden gewöhnlich als Phillips, Standard Oil Indiana, Ziegler (Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE, PP/LLDPE) und Mischungen verschiedener Polyethylentypen (z.B. LDPE/HDPE).
3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen- und Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen-Kohlenstoffmonoxid-Copolymere und deren Mischungen mit anderen Polymeren wie z.B. Polyamiden.
4. Kohlenwasserstoffharze (z.B.C₅₋₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien, Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien, Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren. Styrol und Acrylnitril auf Polyalkylacrylaten oder Polyalkylmethacrylaten, Styrol und Acrylnitril auf Acrylat-Butadien-Copolyrneren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,α-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid, Block-Copolymere der vorstehnd genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide-, sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd, Harnstoff-Formaldehyd- und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
29. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester (z.B. Phthalate, Adipate, Phosphate oder Trimellitate), sowie Mischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Besonders bevorzugte zu stabilisierende Polymere sind Polyolefine, Polyurethane und Polycarbonate.

In diesen Polymeren können weitere Additive wie z.B. Antioxidantien, Lichtschutzmittel (UV-Absorber und/oder HALS-Verbindungen und/oder UV-Quencher), Metalldesaktivatoren, peroxidzerstörende Verbindungen, Polyamidstabilisatoren, basische Co-Stabilisatoren, Nukleierungsmittel, Füllstoffe, Verstärkungsmittel, Weichmacher, Gleitmittel, Emulgatoren, Pigmente und Farbstoffe, optische Aufheller, Flammschutzmittel, Antistatika, Treibmittel, Peroxide, Hydroxylamine, Polyalkohole, Nitrone, Farbverbesserer, Thiosynergisten, Rheologieadditive, Dispergierhilfsmittel usw. enthalten sein.

Diese zusätzlichen Additive können vor, zusammen mit oder nach Zugabe der erfindungsgemässen Mischung den Polymeren zugegeben werden. Die Dosierung sowohl dieser Additive wie auch die der erfindungsgemässen Mischung kann dabei als Feststoff, in Lösung oder Schmelze sowie auch in Form von festen oder flüssigen Mischungen oder Masterbatches/Konzentraten in Batcharbeitsweise als auch kontinuierlich erfolgen.

Die Erfindung umfasst auch alle durch ein Formgebungsverfahren erhältlichen Produkte aus den oben genannten Polymeren, die eine erfindungsgemässe Mischung und mindestens eines der oben erwähnten weiteren Additive enthalten.

Die vorteilhafte Wirkung der erfindungsgemässen Mischung wird durch die nachfolgenden Beispiele illustriert.

### BEISPIEL 1

Zur Herstellung eines erfindungsgemäss stabilisierten Polymeren werden

| | |
|---|---|
| 100,00 Teile | Polypropylen (Eltex P HL 001 PF, Fa. Solvay) |
| 0,05 Teile | Hostanox O-10 (sterisch gehindertes Phenol, Fa. Clariant AG) |
| 0,10 Teile | Calciumstearat und |
| 0,04 Teile | 1,3-Bis(diphenylphosphino)-2,2-dimethylpropan (Komponente 1) und |
| 0,01 Teile | α-Tocopherol (Ronotec 201, Fa. Hoffman-La Roche) (Komponente 2) |

In einem Kenwood-Mischer verrührt und anschliessend durch eine schonende Extrusion auf einem Einschneckenextruder (Fa. Collin, 210 °C, 80 Umdrehungen/min, Kompressionsverhältnis 1:3, Düse 4 mm) homogenisiert und der so erhaltene Polymerstrang granuliert. Zur Untersuchung der Schmelzfluss- und Farbstabilisierung werden die stabilisierten Polymere einer fünffachen Extrusion bei 270 °C auf einem Einschneckenextruder (Göttfert Extrusiometer, 50 Umdrehungen/min, Kompressionsverhältnis 1:3, Düse 2 mm) unterworfen.
Nach der 5. Passage wird der Schmelzflussindex (MFI, Melt Flow Index) nach ASTM 1238 Cond. L (230 °C/ 2.16 kg) bestimmt.

### BEISPIEL 2

Analog zum Beispiel 1 wird ein weiteres erfindungsgemäss stabilisiertes Polymeres aus

| | |
|---|---|
| 100,00 Teilen | Polypropylen (Eltex P HL 001 PF, Fa. Solvay) |
| 0,05 Teilen | Hostanox O-10 (sterisch gehindertes Phenol, Fa. Clariant AG) |
| 0,10 Teilen | Calciumstearat und |
| 0,04 Teilen | 1,1,1-Tris(diphenylphosphinomethyl)-ethan (Komponente 1) und |
| 0,01 Teilen | α-Tocopherol (Ronotec 201, Fa. Hoffman-La Roche) (Komponente 2) |

hergestellt.

### BEISPIEL 3

Analog zum Beispiel 1 wird ein weiteres erfindungsgemäss stabilisiertes Polymeres aus

| | |
|---|---|
| 100,00 Teilen | Polypropylen (Eltex P HL 001 PF, Fa. Solvay) |
| 0,05 Teilen | Hostanox O-10 (sterisch gehindertes Phenol, Fa. Clariant AG) |
| 0,10 Teilen | Calciumstearat und |
| 0,04 Teilen | 1,1,1-Tris(diphenylphosphinomethyl)-propan (Komponente 1) und |
| 0,01 Teilen | α-Tocopherol (Ronotec 201, Fa. Hoffman-La Roche) (Komponente 2) |

hergestellt.

Folgende Vergleichsmischungen werden hergestellt:

### BEISPIEL 4 (Vergleichsmischung ohne Komponente 1)

Analog zum Beispiel 1 wird zu Vergleichszwecken ein gemäss dem Stand der Technik stabilisiertes Polymeres aus

| | | |
|---|---|---|
| 100,00 | Teilen | Polypropylen (Eltex P HL 001PF, Fa. Solvay) |
| 0,05 | Teilen | Hostanox O-10 (sterisch gehindertes Phenol, Fa. Clariant AG) |
| 0,10 | Teilen | Calciumstearat und |
| 0,05 | Teilen | α-Tocopherol (Ronotec 201, Fa. Hoffman-La Roche) |

hergestellt.

### BEISPIEL 5 (Vergleichsmischung ohne Komponente 2)

Analog zum Beispiel 1 wird zu Vergleichszwecken ein gemäss dem Stand der Technik stabilisiertes Polvmeres aus

| | |
|---|---|
| 100,00 Teilen | Polypropylen (Eltex P HL 001PF, Fa. Solvay) |
| 0,05 Teilen | Hostanox O-10 (sterisch gehindertes Phenol, Fa. Clariant AG) |
| 0,10 Teilen | Calciumstearat und |
| 0,05 Teilen | 1,3-Bis(diphenylphosphino)-2,2-dimethylpropan |

hergestellt.

### BEISPIEL 6 (Vergleichsmischung ohne Komponente 2)

Analog zum Beispiel 1 wird zu Vergleichszwecken ein gemäss dem Stand der Technik stabilisiertes Polymeres aus

| | |
|---|---|
| 100,00 Teilen | Polypropylen (Eltex P HL 001 PF, Fa. Solvay) |
| 0,05 Teilen | Hostanox O-10 (sterisch gehindertes Phenol, Fa. Clariant AG) |
| 0,10 Teilen | Calciumstearat und |
| 0,05 Teilen | 1,1,1-Tris(diphenylphosphinomethyl)-ethan |

hergestellt.

### BEISPIEL 7 (Vergleichsmischung ohne Komponente 2)

Analog zum Beispiel 1 wird zu Vergleichszwecken ein gemäss dem Stand der Technik stabilisiertes Polymeres aus

| | |
|---|---|
| 100,00 Teilen | Polypropylen (Eltex P HL 001 PF, Fa. Solvay) |
| 0,05 Teilen | Hostanox O-10 (sterisch gehindertes Phenol, Fa. Clariant AG) |
| 0,10 Teilen | Calciumstearat und |
| 0,05 Teilen | 1,1,1-Tris(diphenylphosphinomethyl)-propan |

hergestellt.

Die erhaltenen Ergebnisse sind in der nachstehenden Tabelle zusammengefasst.

**Tabelle 1:**

| Ergebnisse der Schmelzflussstabilisierungsmessungen eines mit 0,05 Teilen Stabilisator(mischung) stabilisierten Polypropylens. | |
|---|---|
| **Beispiel** | **Melt Flow Index** **(230 °C, 2.16 kg) [g/10 min]** **5. Passage** |
| 1 | 4,43 |
| 2 | 3,41 |
| 3 | 3,39 |
| 4 | 6,41 |
| 5 | 4,60 |
| 6 | 4,02 |
| 7 | 3,99 |

Die Ergebnisse zeigen, dass die Zugabe eines für sich allein genommenen, schlechteren Stabilisators gemäss dem Stand der Technik (Ronotec 201, Beispiel 4; Komponente 2) zu einem weiteren Stabilisator gemäss dem Stand der Technik (Beispiele 5-7; Komponente 1) zu erfindungsgemässen synergistischen Mischungen (Beispiele 1-3) mit verbesserten Stabilisierungseigenschaften (entsprechend kleineren MFI-Werten, bedingt durch verringerten Kettenabbau des Polypropylens) führt. Dies ist überraschend, da man bei einem additiven und somit linearen Änderungsverhalten der Stabilisierungswirkung eine Verschlechterung der Wirksamkeit der Mischungen der Komponenten 1 und 2 gegenüber der reinen Komponente 1 (Beispiele 5-7) hätte erwarten müssen.

## Patentansprüche

1. Mischung enthaltend
a) mindestens eine Verbindung aus der Gruppe der Verbindungen der Formeln (I) bis (IV) [nachfolgend Komponente 1 genannt] 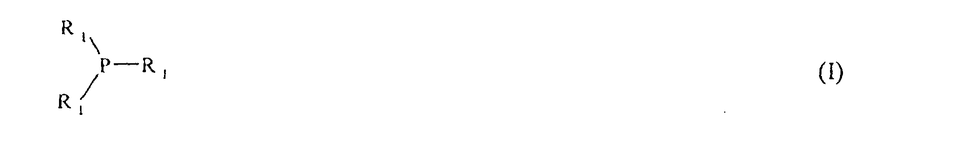 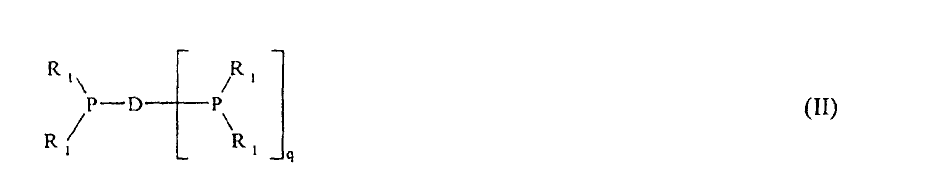 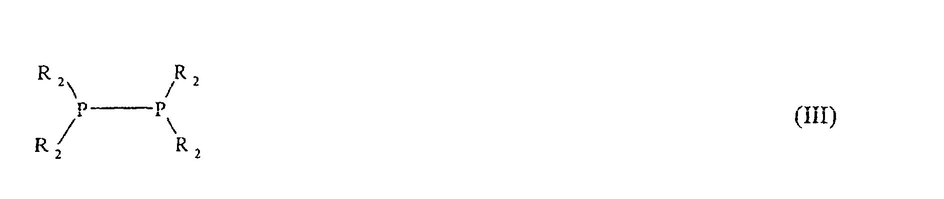 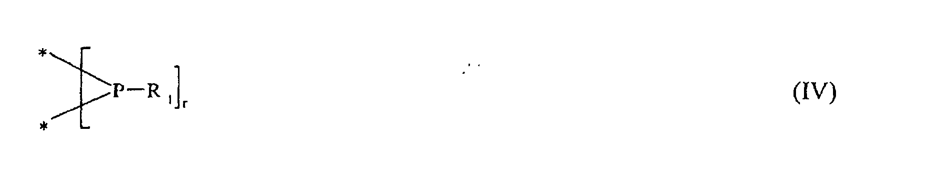 und
b) mindestens eine Verbindung der allgemeinen Formel (V) [nachfolgend Komponente 2 genannt] 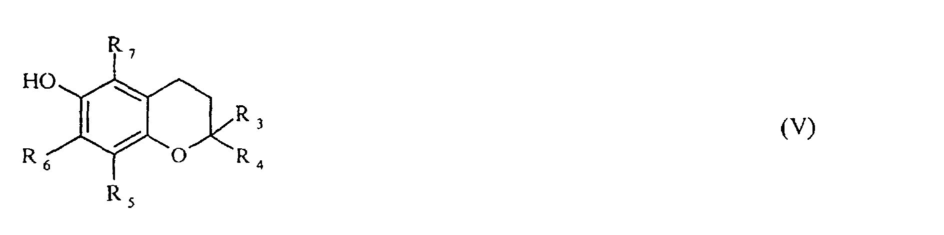
worin unabhängig voneinander
R₁ C₁₋₂₄Alkyl, (linear oder verzweigt), C₅₋₃₀Cycloalkyl, C₁₋₃₀Alkylaryl, C₆₋₂₄Aryl, C₄₋₂₄Heteroaryl,
C₆₋₂₄Aryl oder C₄₋₂₄Heteroaryl, ein- oder mehrfach substituiert mit C₁₋₁₈Alkyl (linear oder verzweigt), C₅₋₁₂Cycloalkyl oder C₁₋₁₈Alkoxy;
R₂ C₄₋₂₄Alkyl (linear oder verzweigt), C₅₋₃₀Cycloalkyl, C₁₋₃₀Alkylaryl, C₆₋₂₄Aryl, C₄₋₂₄Heteroaryl,
C₆₋₂₄Aryl oder C₄₋₂₄Heteroaryl, ein- oder mehrfach substituiert mit C₁₋₁₈Alkyl (linear oder verzweigt), C₅₋₁₂Cycloalkyl oder C₁₋₁₈Alkoxy;
R₃ Wasserstoff, C₁₋₂₄Alkyl (linear oder verzweigt), C₃₋₁₂Cycloalkyl, C₁₋₂₄Alkenyl, ein- oder mehrfach ungesättigt, linear oder verzweigt;
R₄, R₅, R₆, R₇ Wasserstoff, C₁₋₂₄Alkyl (linear oder verzweigt), C₃₋₁₂Cycloalkyl, C₁₋₂₄Alkenyl, ein- oder mehrfach ungesättigt, linear oder verzweigt, Carboxylgruppen -COOR₈, Succinylgruppen -CH(COOR₈)-CH₂-COOR₈;
R₈ Wasserstoff, C₁₋₂₀Alkyl (linear oder verzweigt), C₄₋₁₂Cycloalkyl oder C₂₋₂₀Polyethylen-glycolgruppen;
D C₁₋₃₀Alkylen (linear, verzweigt), C₂₋₃₀Alkyliden, C₅₋₁₂Cycloalkylen, oder C₆₋₂₄Arylen/C₄₋₂₄Heteroarylen,
C₆₋₂₄Arylen/C₄₋₂₄Heteroarylen, ein- oder mehrfach substituiert mit C₁₋₁₈Alkyl (linear oder verzweigt), C₅₋₁₂Cycloalkyl oder C₁₋₁₈Alkoxy;
q 1 bis 5;
r 3 bis 6, wobei die Gruppen P-R₁ in der Formel (IV) Bestandteil eines Phosphacyclus sind, angedeutet durch * an den vom P ausgehenden Bindungen,
bedeuten.

2. Mischung nach Anspruch 1, worin unabhängig voneinander
R₁' C₈₋₂₄Alkyl (linear oder verzweigt), C₆₋₁₂Cycloalkyl, C₂₋₂₄Alkylaryl, C₆₋₂₄Aryl oder C₄₋₁₈Heteroaryl,
C₆₋₂₄Aryl oder Heteroaryl, ein- oder mehrfach substituiert mit C₁₋₁₂Alkyl (linear oder verzweigt), C₅₋₈Cycloalkyl oder C₁₋₁₂Alkoxy;
R₂' C₆₋₁₈Alkyl (linear oder verzweigt), C₅₋₁₂Cycloalkyl, C₁₋₁₈Alkylaryl, C₆₋₂₄Aryl, C₄₋₁₈Heteroaryl,
C₆₋₂₄Aryl oder C₄₋₁₈Heteroaryl, ein- oder mehrfach substituiert mit C₁₋₁₂Alkyl (linear oder verzweigt), C₅₋₈Cycloalkyl oder C₁₋₁₂Alkoxy;
R₃' C₁₋₂₀Alkyl (linear oder verzweigt), C₄₋₈Cycloalkyl, C₁₋₂₀Alkenyl, ein - oder mehrfach ungesättigt, linear oder verzweigt;
R₄', R₅', R₆', R₇' Wasserstoff, C₁₋₂₀Alkyl (linear oder verzweigt), C₄₋₈Cycloalkyl, C₁₋₂₀Alkenyl, ein- oder mehrfach ungesättigt, linear oder verzweigt, Carboxylgruppen -COOR₈', Succinylgruppen -CH(COOR₈')-CH₂-COOR₈';
R₈' Wasserstoff, C₁₋₁₂Alkyl (linear oder verzweigt), C₄₋₈Cycloalkyl oder C₄₋₁₆Polyethylen-glycolgruppen;
D' C₁₋₂₄Alkylen (linear, verzweigt), C₂₋₂₄Alkyliden, C₅₋₈Cycloalkylen, oder C₆₋₂₄Arylen/C₄₋₁₈Heteroarylen
C₆₋₂₄ArylenlC₄₋₁₈Heteroarylen, ein- oder mehrfach substituiert mit C₁₋₁₈Alkyl (linear oder verzweigt), C₅₋₈Cycloalkyl oder C₁₋₁₂Alkoxy;
q' 1 bis 4;
r' 4 oder 5, wobei die Gruppen P-R₁ in der Formel (IV) Bestandteil eines Phosphacyclus sind, angedeutet durch * an den vom P ausgehenden Bindungen.
bedeuten.

3. Mischung nach Anspruch 1, worin unabhängig voneinander
R₁" C₆₋₂₄Aryl oder C₄₋₁₈Heteroaryl, C₆₋₂₄Aryl oder C₄₋₁₈Heteroarylen, ein- oder mehrfach substituiert mit C₁₋₁₂Alkyl (linear oder verzweigt), C₅₋₈Cycloalkyl oder C₁₋₁₂Alkoxy;
R₂" C₈₋₁₈Alkyl (linear oder verzweigt), C₅₋₈Cycloalkyl, C₁₋₁₈Alkylaryl, C₆₋₁₂Aryl, C₄₋₁₈Heteroaryl,
C₆₋₁₂Aryl oder C₄₋₁₈Heteroaryl, ein- oder mehrfach substituiert mit C₁₋₁₂Alkyl (linear oder verzweigt), C₆₋₈Cycloalkyl oder C₁₋₈Alkoxy;
R₃" C₁₋₁₆Alkyl (linear oder verzweigt), C₅₋₈Cycloalkyl, C₁₋₁₆Alkenyl, ein- oder mehrfach ungesättigt, linear oder verzweigt;
R₄", R₅", R₆", R₇" Wasserstoff, C₁₋₁₆Alkyl (linear oder verzweigt), C₅₋₈Cycloalkyl, C₁₋₁₆Alkenyl, ein- oder mehrfach ungesättigt, linear oder verzweigt, Carboxylgruppen -COOR₈", Succinylgruppen -CH(COOR₈")-CH₂-COOR₈";
R₈" Wasserstoff, C₁₋₈Alkyl (linear oder verzweigt), C₅₋₈Cycloalkyl oder C₆₋₁₂Polyethylen-glycolgruppen;
D" C₁₋₁₈Alkylen (linear, verzweigt), C₂₋₂₄Alkyliden, C₅₋₈Cycloalkylen, oder C₆₋₂₄Arylen/C₄₋₁₈Heteroarylen
C₆₋₂₄Arylen/C₄₋₁₈Heteroarylen, ein- oder mehrfach substituiert mit C₁₋₁₈Alkyl (linear oder verzweigt), C₅₋₈Cycloalkyl oder C₁₋₁₂Alkoxy;
q" 1 bis 4;
r" 4 oder 5, wobei die Gruppen P-R₁ in der Formel (IV) Bestandteil eines Phosphacyclus sind, angedeutet durch * an den vom P ausgehenden Bindungen.
bedeuten.

4. Mischung nach Anspruch 1, worin das Mengenverhältniss der Komponente 1 zur Komponente 2 von 50:1 bis 2:1, bevorzugt von 20:1 bis 1,5:1, besonders bevorzugt von 15:1 bis 1:1 1 beträgt.

5. Verfahren zum Stabilisieren von Polymeren gegen den thermo-oxidativen Abbau, das die Zugabe und Einarbeitung einer Mischung nach einem der Ansprüche 1 bis 4 in Mengen von 0,001 bis 2 Gew.-%, bevorzugt von 0,005 bis 1 Gew.-%, besonders bevorzugt von 0,0075 bis 0,75 Gew.-% bezogen auf das zu stabilisierende Polymere, in fester oder flüssiger/geschmolzener Form, in Lösung oder als feste Masterbatch- oder Compound-Formulierung umfasst.

## Claims

1. Mixture comprising
a) at least one compound from the group of compounds of the formulae (I) to (IV) [hereinafter termed component 1] 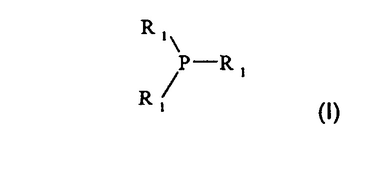 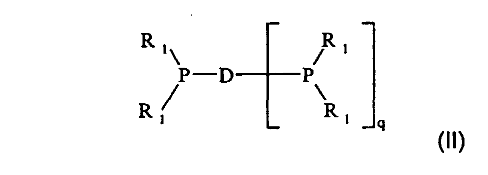 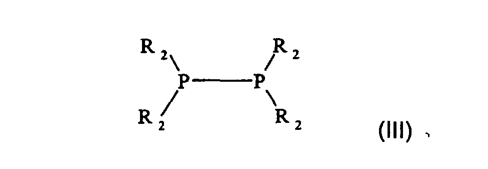 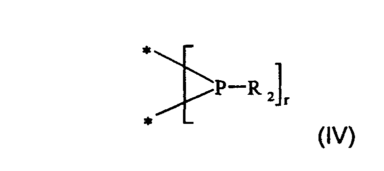 and
b) at least one compound of the general formula (V) [hereinafter termed component 2] 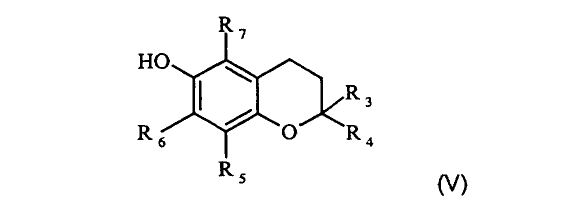
where, independently of one another,
R₁ is C₁-C₂₄-alkyl (linear or branched), C₅-C₃₀-cycloalkyl, C₁-C₃₀-alkylaryl, C₆-C₂₄-aryl, C₄-C₂₄-heteroaryl, C₆-C₂₄-aryl or C₄-C₂₄-heteroaryl, mono- or polysubstituted by C₁-C₁₈-alkyl (linear or branched), C₅-C₁₂-cycloalkyl or C₁-C₁₈-alkoxy;
R₂ is C₄-C₂₄-alkyl (linear or branched), C₅-C₃₀-cycloalkyl, C₁-C₃₀-alkylaryl, C₆-C₂₄-aryl, C₄-C₂₄-heteroaryl, C₆-C₂₄-aryl or C₄-C₂₄-heteroaryl, mono- or polysubstituted by C₁-C₁₈-alkyl (linear or branched), C₅-C₁₂-cycloalkyl or C₁-C₁₈-alkoxy;
R₃ is hydrogen, C₁-C₂₄-alkyl (linear or branched), C₃-C₁₂-cycloalkyl, C₁-C₂₄-alkenyl, mono- or polyunsaturated, linear or branched;
R₄, R₅, R₆, R₇ are hydrogen, C₁-C₂₄-alkyl (linear or branched), C₃-C₁₂-cycloalkyl, C₁-C₂₄-alkenyl, mono- or polyunsaturated, linear or branched, carboxy groups -COOR₈, succinyl groups -CH(COOR₈)-CH₂-COOR₈;
R₈ is hydrogen, C₁-C₂₀-alkyl (linear or branched), C₄-C₁₂-cycloalkyl or C₂-C₂₀-polyethylene glycol groups;
D is C₁-C₃₀-alkylene (linear or branched), C₂-C₃₀-alkylidene, C₅-C₁₂-cycloalkylene, or C₆-C₂₄-arylene/C₄-C₂₄-heteroarylene, C₆-C₂₄-arylene/C₄-C₂₄-heteroarylene, mono- or polysubstituted by C₁-C₁₈-alkyl (linear or branched), C₅-C₁₂-cycloalkyl or C₁-C₁₈-alkoxy;
q is from 1 to 5;
r is from 3 to 6, the groups P-R₁ in the formula (IV) being a constituent of a phosphacycle indicated by * on the bonds emanating from P.

2. Mixture according to Claim 1, where, independently of one another,
R₁' is C₈-C₂₄-alkyl (linear or branched), C₆-C₁₂-cycloalkyl, C₂-C₂₄-alkylaryl, C₆-C₂₄-ary), or C₄-C₁₈-heteroaryl, C₆-C₂₄-aryl or heteroaryl, mono- or polysubstituted by C₁-C₁₂-alkyl (linear or branched), C₅-C₈-cycloalkyl or C₁-C₁₂-alkoxy);
R₂' is C₆-C₁₈-alkyl (linear or branched), C₅-C₁₂-cycloalkyl, C₁-C₁₈-alkylaryl, C₆-C₂₄-aryl, C₄-C₁₈-heteroaryl, C₆-C₂₄-aryl or C₄-C₁₈-heteroaryl, mono- or polysubstituted by C₁-C₁₂-alkyl (linear or branched), C₅-C₈-cycloalkyl or C₁-C₁₂-alkoxy;
R₃' is C₁-C₂₀-alkyl (linear or branched), C₄-C₈-cycloalkyl, C₁-C₂₀-alkenyl, mono- or polyunsaturated, linear or branched;
R₄', R₅', R₆', R₇' are hydrogen, C₁-C₂₀-alkyl (linear or branched), C₄-C₈-cycloalkyl, C₁-C₂₀-alkenyl, mono- or polyunsaturated, linear or branched, carboxy groups -COOR₈', succinyl groups -CH(COOR₈')-CH₂-COOR₈';
R₈' is hydrogen, C₁-C₁₂-alkyl (linear or branched), C₄-C₈-cycloalkyl or C₄-C₁₆-polyethylene glycol groups;
D' is C₁-C₂₄-alkylene (linear or branched), C₂-C₂₄-alkylidene, C₅-C₈-cycloalkylene or C₆-C₂₄-arylene/C₄-C₁₈-heteroarylene, C₆-C₂₄-arylene/C₄-C₁₈-heteroarylene, mono- or polysubstituted by C₁-C₁₈-alkyl (linear or branched), C₅-C₈-cycloalkyl or C₁-C₁₂-alkoxy;
q' is from 1 to 4;
r' is from 4 to 5, the groups P-R₁ in the formula (IV) being a constituent of a phosphacycle indicated by * on the bonds emanating from P.

3. Mixture according to Claim 1, where, independently of one another,
R₁" is C₆-C₂₄-aryl or C₄-C₁₈-heteroaryl, C₆-C₂₄-aryl or C₄-C₁₈-heteroarylene, [sic] mono- or polysubstituted by C₁-C₁₂-alkyl (linear or branched), C₅-C₈-cycloalkyl or C₁-C₁₂-alkoxy;
R₂" is C₈-C₁₈-alkyl (linear or branched), C₅-C₈-cycloalkyl, C₁-C₁₈-alkylaryl, C₆-C₁₂-aryl, C₄-C₁₈-heteroaryl, C₆-C₁₂-aryl or C₄-C₁₈-heteroaryl, mono- or polysubstituted by C₁-C₁₂-alkyl (linear or branched), C₆-C₈-cycloalkyl or C₁-C₈-alkoxy;
R₃" is C₁-C₁₆-alkyl (linear or branched), C₅-C₈-cycloalkyl, C₁-C₁₆-alkenyl, mono- or polyunsaturated, linear or branched;
R₄", R₅", R₆", R₇" are hydrogen, C₁-C₁₆-alkyl (linear or branched), C₅-C₈-cycloalkyl, C₁-C₁₆-alkenyl, mono- or polyunsaturated, linear or branched, carboxy groups -COOR₈", succinyl groups -CH(COOR₈")-CH₂-COOR₈";
R₈" is hydrogen, C₁-C₈-alkyl (linear or branched), C₅-C₈-cycloalkyl or C₆-C₁₂-polyethylene glycol groups;
D" is C₁-C₁₈-alkylene (linear or branched), C₂-C₂₄-alkylidene, C₅-C₈-cycloalkylene, or C₆-C₂₄-arylene/C₄-C₁₈-heteroarylene, C₆-C₂₄-arylene/C₄-C₁₈-heteroarylene, mono- or polysubstituted by C₁-C₁₈-alkyl (linear or branched), C₅-C₈-cycloalkyl or C₁-C₁₂-alkoxy;
q" is from 1 to 4;
r" is from 4 to 5, the groups P-R₁ in the formula (IV) being a constituent of a phosphacycle indicated by * on the bonds emanating from P.

4. Mixture according to Claim 1, where the quantitative ratio of component 1 to component 2 is from 50:1 to 2:1, preferably from 20:1 to 1.5:1, particularly preferably from 15:1 to 1:1.

5. Process which stabilizes polymers with respect to thermooxidative degradation and encompasses the addition and incorporation of a mixture according to any of Claims 1 to 4 in amounts of from 0.001 to 2% by weight, preferably from 0.005 to 1% by weight, particularly preferably from 0.0075 to 0.75% by weight, based on the polymer to be stabilized, in solid or liquid/molten form, in solution or as solid masterbatch or formulated compound.

## Revendications

1. Mélange contenant
a) au moins un composé du groupe de composés répondant aux formules (I) à (IV) [dénommé dans ce qui suit Composant 1] 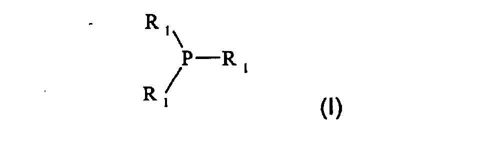 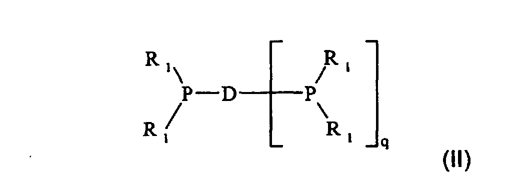 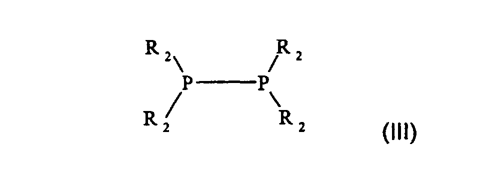 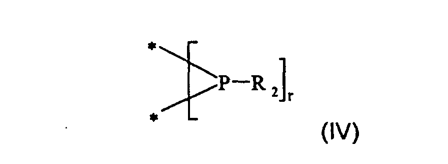 et
b) au moins un composé de formule générale (V) [dénommé dans ce qui suit Composant 2] 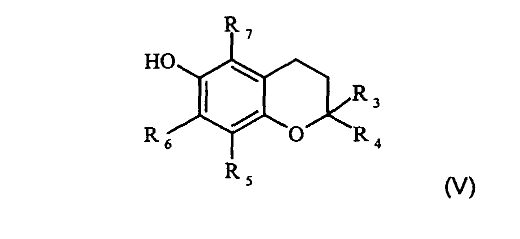
formules dans lesquelles indépendamment les uns des autres
R₁ signifie alkyle en C₁₋₂₄ (linéaire ou ramifié), cycloalkyle en C₅₋₃₀, alkylaryle en C₁₋₃₀, aryle en C₆₋₂₄, hétéroaryle en C₄₋ ₂₄, aryle en C₆₋₂₄ ou hétéroaryle en C₄₋₂₄, substitué une ou plusieurs fois par alkyle en C₁₋₁₈ (linéaire ou ramifié), cycloalkyle en C₅₋₁₂ ou alcoxy en C₁₋₁₈;
R₂ signifie alkyle en C₄₋₂₄ (linéaire ou ramifié), cycloalkyle en C₅₋₃₀, alkylaryle en C₁₋₃₀, aryle en C₆₋₂₄, hétéroaryle en C₄₋ ₂₄, aryle en C₆₋₂₄ ou hétéroaryle en C₄₋₂₄, une ou plusieurs fois substitué par alkyle en C₁₋₁₈ (linéaire ou ramifié), cycloalkyle en C₅₋₁₂ ou alcoxy en C₁₋₁₈;
R₃ signifie l'hydrogène, alkyle en C₁₋₂₄ (linéaire ou ramifié), cycloalkyle en C₃₋₁₂, alcényle en C₁₋₂₄, une ou plusieurs fois insaturé, linéaire ou ramifié;
R₄, R₅, R₆, R₇ signifient l'hydrogène, alkyle en C₁₋₂₄ (linéaire ou ramifié), cycloalkyle en C₃₋₁₂, alcényle en C₁₋₂₄, une ou plusieurs fois insaturé, linéaire ou ramifié, des groupes carboxy - COOR₈, des groupes succinyle -CH(COOR₈)-CH₂-COOR₈;
R₈ signifie l'hydrogène, alkyle en C₁₋₂₀ (linéaire ou ramifié), cycloalkyle en C₄₋₁₂ ou des groupes polyéthylène-glycoliques en C₂₋₂₀;
D signifie alkylène en C₁₋₃₀ (linéaire, ramifié), alkylidène en C₂₋₃₀, cycloalkylène en C₅₋₁₂ ou arylène en C₆₋ ₂₄/hétéroarylène en C₄₋₂₄, arylène en C₆₋₂₄/hétéroarylène en C₄₋₂₄, une ou plusieurs fois substitué par alkyle en C₁₋₁₈ (linéaire ou ramifié), cycloalkyle en C₅₋₁₂ ou alcoxy en C₁₋ ₁₈;
q signifie 1 à 5;
r signifie 3 à 6, les groupes P-R₁ dans la formule (IV) étant l'élément d'un cycle contenant du phosphore, indiqué par * aux liaisons partant de P.

2. Mélange selon la revendication 1, où indépendamment les uns des autres
R₁' signifie alkyle en C₈₋₂₄ (linéaire ou ramifié), cycloalkyle en C₆₋₁₂, alkylaryle en C₂₋₂₄, aryle en C₆₋₂₄ ou hétéroaryle en C₄₋₁₈, aryle en C₆₋₂₄ ou hétéroaryle, substitué une ou plusieurs fois par alkyle en C₁₋₁₂ (linéaire ou ramifié), cycloalkyle en C₅₋₈ ou alcoxy en C₁₋₁₂;
R₂' signifie alkyle en C₆₋₁₈ (linéaire ou ramifié), cycloalkyle en C₅₋₁₂, alkylaryle en C₁₋₁₈, aryle en C₆₋₂₄, hétéroaryle en C₄₋₁₈, aryle en C₆₋₂₄ ou hétéroaryle en C₄₋₁₈, une ou plusieurs fois substitué par alkyle en C₁₋₁₂ (linéaire ou ramifié), cycloalkyle en C₅₋₈ ou alcoxy en C₁₋₁₂;
R₃' signifie alkyle en C₁₋₂₀ (linéaire ou ramifié), cycloalkyle en C₄₋₈, alcényle en C₁₋₂₀, une ou plusieurs fois insaturé, linéaire ou ramifié;
R₄', R₅', R₆', R₇' signifient l'hydrogène, alkyle en C₁₋₂₀ (linéaire ou ramifié), cycloalkyle en C₄₋₈, alcényle en C₁₋₂₀, une ou plusieurs fois insaturé, linéaire ou ramifié, des groupes carboxy -COOR₈', des groupes succinyle -CH(COOR₈')-CH₂-COOR₈';
R₈' signifie l'hydrogène, alkyle en C₁₋₁₂ (linéaire ou ramifié), cycloalkyle en C₄₋₈ ou des groupes polyéthylène-glycoliques en C₄₋₁₆;
D' signifie alkylène en C₁₋₂₄ (linéaire ou ramifié), alkylidène en C₂₋ ₂₄, cycloalkylène en C₅₋₈ ou arylène en C₆₋₂₄/hétéroarylène en C₄₋₁₈, arylène en C₆₋₂₄/hétéroarylène en C₄₋₁₈, une ou plusieurs fois substitué par alkyle en C₁₋₁₈ (linéaire ou ramifié), cycloalkyle en C₅₋₈ ou alcoxy en C₁₋₁₂;
q' signifie 1 à 4;
r' signifie 4 ou 5, les groupes P-R₁ dans la formule (IV) étant l'élément d'un cycle contenant du phosphore, indiqué par * aux liaisons partant de P.

3. Mélange selon la revendication 1, où indépendamment les uns des autres
R₁" signifie aryle en C₆₋₂₄ ou hétéroaryle en C₄₋₁₈, aryle en C₆₋₂₄ ou hétéroaryle en C₄₋₁₈, substitué une ou plusieurs fois par alkyle en C₁₋₁₂ (linéaire ou ramifié), cycloalkyle en C₅₋₈ ou alcoxy en C₁₋ 12;
R₂" signifie alkyle en C₈₋₁₈ (linéaire ou ramifié), cycloalkyle en C₅₋ ₈,alkylaryle en C₁₋₁₈, aryle en C₆₋₁₂, hétéroaryle en C₄₋₁₈, aryle en C₆₋₁₂ ou hétéroaryle en C₄₋₁₈, une ou plusieurs fois substitué par alkyle en C₁₋₁₂ (linéaire ou ramifié), cycloalkyle en C₆₋₈ ou alcoxy en C₁₋₈;
R₃" signifie alkyle en C₁₋₁₆ (linéaire ou ramifié), cycloalkyle en C₅₋₈, alcényle en C₁₋₁₆, une ou plusieurs fois insaturé, linéaire ou ramifié;
R₄", R₅", R₆", R₇" signifient l'hydrogène, alkyle en C₁₋₁₆ (linéaire ou ramifié), cycloalkyle en C₅₋₈, alcényle en C₁₋₁₆, une ou plusieurs fois insaturé, linéaire ou ramifié, des groupes carboxy -COOR₈", des groupes succinyle -CH(COOR₈")-CH₂-COOR₈";
R₈" signifie l'hydrogène, alkyle en C₁₋₈ (linéaire ou ramifié), cycloalkyle en C₅₋₈ ou des groupes polyéthylène-glycoliques en C₆₋₁₂;
D" signifie alkylène en C₁₋₁₈ (linéaire ou ramifié), alkylidène en C₂₋ ₂₄, cycloalkylène en C₅₋₈ ou arylène en C₆₋₂₄/hétéroarylène en C₄₋₁₈, arylène en C₆₋₂₄/hétéroarylène en C₄₋₁₈, une ou plusieurs fois substitué par alkyle en C₁₋₁₈ (linéaire ou ramifié), cycloalkyle en C₅₋₈ ou alcoxy en C₁₋₁₂;
q" signifie 1 à 4;
r" signifie 4 ou 5, les groupes P-R₁ dans la formule (IV) étant l'élément d'un cycle contenant du phosphore, indiqué par * aux liaisons partant de P.

4. Mélange selon la revendication 1, dans lequel la proportion du Composant 1 au Composant 2 est de 50:1 à 2:1, de préférence de 20:1 à 1,5:1, de façon particulièrement préférée de 15:1 à 1:1.

5. Procédé pour la stabilisation de polymères contre la dégradation thermo-oxydative, qui comprend l'addition et l'incorporation d'un mélange selon une des revendications 1 à 4 en des quantités de 0,001 à 2 % en poids, de préférence de 0,005 à 1 % en poids, de façon particulièrement préférée de 0,0075 à 0,75 % en poids par rapport au polymère à stabiliser, sous forme solide ou liquide/fondue, en solution ou comme formulation solide de mélange maître ou de produit compacté.
